# EUROPEAN PATENT APPLICATION

(11) **EP 3 059 997 A1**
(43) Date of publication of application: **24.08.2016**
(21) Application number: 14794263.5
(22) Date of filing: 19.05.2014
(51) Int. Cl.: H04W 28/08

(54) **DATA PACKAGE SHUNTING TRANSMISSION METHOD AND SYSTEM, AND COMPUTER STORAGE MEDIUM**

(30) Priority: 17.10.2013 CN 201310487683
(71) Applicant: ZTE Corporation, Shenzhen, Guangdong 518057 (CN)
(72) Inventor: WANG, Xin, Shenzhen Guangdong 518057 (CN); HE, Feng, Shenzhen Guangdong 518057 (CN)
(74) Representative: Lavoix
(86) International application number: PCT/CN2014/077805
(87) International publication number: WO 2014/180373

(57) **Abstract**

Disclosed are a data package shunting transmission method and system, and a computer storage medium. The method comprises: converting an RLC SDU data stream sent by a PDCP layer into a first RLC PDU data stream and a second RLC PDU data stream through an M-RLC layer; sending the first RLC PDU data stream to a first MAC layer, sending the second RLC PDU data stream to an S-RLC layer, performing partitioning and/or cascade treatment on and adding/modifying PDU package heads of the various RLC PDUs in the second RLC PDU data stream through the S-RLC layer, and sending same to a second MAC layer; and respectively sending the first RLC PDU data stream and the second RLC PDU data stream to a receiving end by means of the first MAC layer and the second MAC layer. Also disclosed at the same time is a data package shunting transmission system. By adopting the present invention, the service requirements of high mobility of a UE can be taken into consideration while meeting the large data volume requirements of the UE.

## Description

### TECHNICAL FIELD

The disclosure relates to a mobile communication technology, and in particular to a data packet shunting transmission method and system, and a computer storage medium.

### BACKGROUND

With constant evolution of wireless communication technologies and protocol standards, mobile packet services have been tremendously developed, and the data throughput of a single terminal is constantly improved. For example, a Long Term Evolution (LTE) system can support data transmission with the maximum rate of 100Mbps at downlink within the bandwidth of 20M; in a subsequent enhanced LTE-Advanced (LTE-A) system, the data transmission rate will be further improved, and even reach 1 Gbps.

Inflation type growth of the terminal data service volume causes great pressure and challenge on the service capability and the deployment strategy of a mobile network. An operator, on the one hand, needs to enhance the existing network deployment and communication technology, and on the other hand, expects to accelerate popularization and network expansion of new technologies, thus fulfilling the aim of quickly improving the network performance. As developed up to now, a mobile communication system becomes harder and harder to provide economic, flexible and high-capability services by only enhancing a Macro network; thus, a network strategy has become the most attractive solution for deploying Low Power Node (LPN) to provide Small Cell (SC) coverage.

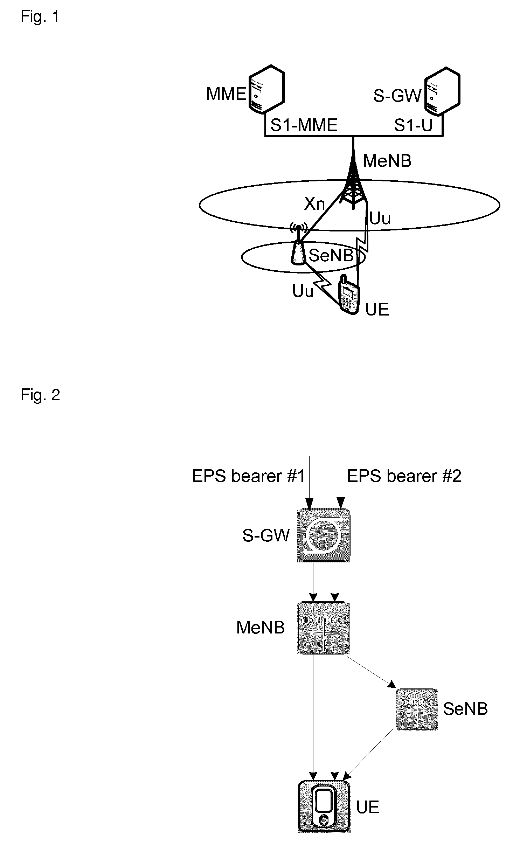

Enhancement of aspects such as LPN deployment and capability has been considered as one of the most interesting projects in network development in the future by the Third Generation Partnership Project (3GPP). However, such process that each type of eNB independently provides a service to a User Equipment (UE) causes many problems, and cannot meet the service requirements on a large data volume and high mobility. Therefore, such scene where the LPNs deployed within the coverage range and at the edge of a Macro eNB together form an access network in an Evolved-Universal mobile telecommunications system Terrestrial Radio Access Network (E-UTRAN) system structure, thus jointly providing a data transmission service to the UE is more approved in the industry, and there is a more universal recognized structure mode basically, as shown in Fig. 1; an eNB which has an S1-MME interface to a Mobility Management Entity (MME) in a Core Network (CN) and is considered as a mobile anchor point by the CN is called a Master eNB (MeNB); except for the MeNB, those nodes providing extra radio resources to the UE are called Secondary eNBs (SeNB). An interface between the MeNB and the SeNB is temporarily called an Xn interface capable of transmitting a control plane signalling and user plane data. Wireless Uu interfaces are established between the MeNB as well the SeNB and the UE, that is, the UE is in Dual Connectivity (DC).

Under the system structure, a specific user plane data transmission structure can as shown as Fig. 2. With reference to downlink data, transmission of an EPS bearer#1 is the same as that of the traditional art from an S-GW to the MeNB through an S1-U interface, and to the UE through the wireless Uu interface through the MeNB; data of an EPS bearer#2 are transmitted from the S-GW to the MeNB through the S1-U interface, and the MeNB can transmit part of data packets to the UE through the Uu interface; the other part of data packets are transmitted to the SeNB through the Xn interface and then to the UE by the SeNB through the Uu interface. Therefore, the data packet of the same EPS bearer is transmitted via radio resources of two eNBs, greatly improving the throughput of the bearer and meeting the data rate requirement of the UE.

However, the system structure cannot meet the stability of the mobility of UE while meeting requirement on the data rate of the UE; when an SeNB cell into which the UE accesses is changed from one to the other, the data interruption time and packet loss which are caused by change of SeNB serving cells cannot be reduced, and the influence, caused by change of the SeNBs, on the network side and terminal nodes cannot be reduced.

### SUMMARY

In view of this, the disclosure is intended to provide a data packet shunting transmission method and system, and a computer storage medium, which can both meet the requirement on a large data volume of User Equipment (UE) and meet the service requirement on high mobility of the UE.

To this end, the technical solutions of the embodiment of the disclosure are implemented as follows.

On a first aspect, a data packet shunting transmission method is provided, which is applied to a Radio Link Control (RLC) layer which includes a Master-Radio Link Control (M-RLC) layer and a Secondary-Radio Link Control (S-RLC) layer. The method includes:
the M-RLC layer converts an RLC Service Data Unit (RLC SDU) data stream transmitted by a Packet Data Convergence Protocol (PDCP) layer into a first RLC Protocol Data Unit (RLC PDU) data stream and a second RLC PDU data stream;
the first RLC PDU data stream is transmitted to a first Medium Access Control (MAC) layer;
the second RLC PDU data stream is transmitted to the S-RLC layer;
the S-RLC layer transmits the second RLC PDU to a second MAC layer;
the first MAC layer transmits the first RLC PDU data stream to a receiving end;
a second MAC layer transmits the second RLC PDU data stream to the receiving end.

In an embodiment, the step that the M-RLC layer converts an RLC SDU data stream transmitted by the PDCP layer into a first RLC PDU data stream and a second RLC PDU data stream may include:
the M-RLC layer receives the RLC SDU data stream transmitted by the PDCP layer;
the RLC SDU data stream is divided into a first RLC SDU data stream and a second RLC SDU data stream;
segmentation and/or concatenation processing is performed on each RLC SDU in the first RLC SDU data stream according to first indication information transmitted by the first MAC layer, and a PDU packet header is added to each RLC SDU subjected to segmentation and/or concatenation processing to package the first RLC SDU data stream into the first RLC PDU data stream;
segmentation and/or concatenation processing is performed on each RLC SDU in the second RLC SDU data stream according to second indication information transmitted by the S-RLC layer or a pre-estimated value preset by the M-RLC layer, and a PDU packet header is added to each RLC SDU subjected to segmentation and/or concatenation processing to package the second RLC SDU data stream into the second RLC PDU data stream.

In an embodiment, the method may further include: the M-RLC layer retransmits data packets, which the receiving end fails to receive, according to a status report fed back by the receiving end.

In an embodiment, the step that the S-RLC layer transmits the second RLC PDU data stream to the second MAC layer may include:
segmentation and/or concatenation processing is performed on each RLC PDU in the second RLC PDU data stream according to indication information transmitted by the second MAC layer, a PDU packet header is added to each RLC PDU subjected to segmentation and/or concatenation processing or a PDU packet header of each RLC PDU subjected to segmentation and/or concatenation processing is modified, and the resulting RLC PDU data stream is transmitted to the second MAC layer.

On a second aspect, a data packet shunting transmission method is provided. The method is applied to an RLC layer which includes an M-RLC layer and an S-RLC layer. The method includes:
the M-RLC layer respectively receives a first RLC PDU data stream transmitted by a first MAC layer and a second RLC PDU data stream transmitted by the S-RLC layer;
RLC PDUs in the first RLC PDU data stream and the second RLC PDU data stream are sequenced according to SNs of the RLC PDUs;
PDU packet headers are removed from the sequenced RLC PDUs;
the first RLC PDU data stream in which the RLC PDU headers are removed and the second RLC PDU data stream in which the RLC PDU headers are removed are reassembled into an RLC SDU data stream;
the RLC SDU data stream is transmitted to a PDCP layer, and a status report is fed back to the M-RLC layer at a transmitting end.

In an embodiment, the method may further include:
The S-RLC layer receives the second RLC PDU data stream transmitted by a second MAC layer;
the second RLC PDU data stream is subjected to PDU packet header removal or modification, sequencing and reassembly, and the resulting second RLC PDU data stream is transmitted to the M-RLC layer.

On a third aspect, a data packet shunting transmission system is provided, which includes: a PDCP entity, an M-RLC entity, an S-RLC entity, a first MAC entity and a second MAC entity, in which:
the PDCP entity is configured to transmit an RLC SDU data stream to the M-RLC entity;
the M-RLC entity is configured to convert the RLC SDU data stream transmitted by the PDCP entity into a first RLC PDU data stream and a second RLC PDU data stream, transmit the first RLC PDU data stream to the first MAC entity, and transmit the second RLC PDU data stream to the S-RLC entity;
the S-RLC entity is configured to receive the second RLC PDU data stream transmitted by the M-RLC entity, and transmit the second RLC PDU data stream to the second MAC entity;
the first MAC entity is configured to receive the first RLC PDU data stream transmitted by the M-RLC entity, and transmit the first RLC PDU data stream to a receiving end;
the second MAC entity is configured to receive the second RLC PDU data stream transmitted by the S-RLC entity, and transmit the second RLC PDU data stream to the receiving end.

In an embodiment, the M-RLC entity may include: a receiving unit, a shunting unit, a first size pre-processing unit, a first packaging unit, a second size pre-processing unit and a second packaging unit,
the receiving unit is configured to receive the RLC SDU data stream transmitted by the PDCP entity;
the shunting unit is configured to divide the RLC SDU data stream into a first RLC SDU data stream and a second RLC SDU data stream;
the first size pre-processing unit is configured to perform segmentation and/or concatenation processing on each RLC SDU in the first RLC SDU data stream according to first indication information transmitted by the first MAC entity;
the first packaging unit is configured to add PDU packet headers to the RLC SDUs segmented and/or concatenated by the first size pre-processing unit to package the first RLC SDU data stream into the first RLC PDU data stream;
the second size pre-processing unit is configured to perform segmentation and/or concatenation processing on each RLC SDU in the second RLC SDU data stream according to second indication information transmitted by the S-RLC entity or a pre-estimated value preset by the M-RLC entity;
the second packaging unit is configured to add a PDU packet header to each RLC SDU segmented and/or concatenated by the second size pre-processing unit to package the second RLC SDU data stream into the second RLC PDU data stream.

In an embodiment, the M-RLC entity further includes: a status report receiving unit and a retransmission unit,
the status report receiving unit is configured to receive a status report fed back by the receiving end;
the retransmission unit is configured to retransmit data packets, which the receiving end fails to receive, according to the status report.

In an embodiment, the S-RLC entity includes: a third size pre-processing unit and a third packaging unit; wherein,
the third size pre-processing unit is configured to perform segmentation and/or concatenation processing on each RLC PDU in the second RLC PDU data stream according to indication information transmitted by the second MAC entity;
the third packaging unit is configured to add PDU packet headers to the RLC PDUs segmented and/or concatenated by the third size pre-processing unit or modify PDU pack headers of the RLC PDUs segmented and/or concatenated by the third size pre-processing unit, and transmit the resulting second RLC PDU data stream to the second MAC entity.

On a fourth aspect, a data packet shunting transmission system is provided, which includes a PDCP entity, an M-RLC entity, an S-RLC entity, a first MAC entity and a second MAC entity, in which:
the first MAC entity is configured to transmit a first RLC PDU data stream to the M-RLC entity;
the second MAC entity is configured to transmit a second RLC PDU data stream to the S-RLC entity;
the S-RLC entity is configured to receive the second RLC PDU data stream transmitted by the second MAC entity, and transmit the second RLC PDU data stream to the M-RLC entity;
the M-RLC entity is configured to respectively receive the first RLC PDU data stream transmitted by the first MAC entity and the second RLC PDU data stream transmitted by the S-RLC entity; sequence RLC PDUs in the first RLC PDU data stream and the second RLC PDU data stream according to SNs of the RLC PDUs; remove PDU packet headers from the sequenced RLC PDUs to reassemble the first RLC PDU data stream in which the RLC PDU packet headers are removed and the second RLC PDU data stream in which the RLC PDU packet headers are removed into an RLC SDU data stream; transmit the RLC SDU data stream to the PDCP entity, and feed back a status report to the M-RLC entity at a transmitting end.

The PDCP entity is configured to receive the RLC SDU data stream transmitted by the M-RLC entity.

In an embodiment, the S-RLC entity is further configured to receive the second RLC PDU data stream transmitted by the second MAC entity; perform PDU packet header removal or modification, sequencing and reassembly on the second RLC PDU data stream, and transmit the resulting second RLC PDU data stream to the M-RLC entity.

On a fifth aspect, a computer storage medium is provided, which has stored therein computer executable instructions for executing the method of any technical solution disclosed by embodiments of the first aspect of the disclosure.

On a sixth aspect, a computer storage medium is provided, which has stored therein computer executable instructions for executing the method of any technical solution disclosed by embodiments of the second aspect of the disclosure.

The technical solutions disclosed by the embodiments of the disclosure are applied to an RLC layer; the RLC layer includes an M-RLC layer and an S-RLC layer; the M-RLC layer converts an RLC SDU data stream transmitted by a PDCP layer into a first RLC PDU data stream and a second RLC PDU data stream, transmits the first RLC PDU data stream to a first MAC layer, and transmits the second RLC PDU data stream the S-RLC layer; the S-RLC layer transmits the second RLC PDU to the second MAC layer; the first MAC layer and the second MAC layer respectively transmit the first RLC PDU data stream and the second RLC PDU data stream to a receiving end. Therefore, on the one hand, a network can provide rapid and efficient multi-stream joint data transmission for the UE; on the other hand, due to a lower protocol hierarchy caused by shunting, when an SeNB implementing shunted data transmission changes, a fewer of protocol hierarchies are required to be re-established, thus avoiding forwarding of data packets and meeting the requirements on the service rate and the mobility of the UE.

### BRIEF DESCRIPTION OF THE DRAWINGS

Fig. 1 is a diagram of deployment of a heterogeneous network;
Fig. 2 is a transmission diagram based on a bearing-level shunting principle;
Fig. 3 is a flowchart of implementation of a data packet shunting transmission method according to a first embodiment of the disclosure;
Fig. 4 is a flowchart of implementation of a data packet shunting transmission method according to a second embodiment of the disclosure;
Fig. 5 is a schematic structural diagram of a data packet shunting transmission system according to a first embodiment of the disclosure;
Fig. 6 is a schematic structural diagram of the M-RLC entity in the first embodiment of the disclosure;
Fig. 7 is a schematic structural diagram of the S-RLC entity in the first embodiment of the disclosure;
Fig. 8 is a schematic structural diagram of a data packet shunting transmission system according to a second embodiment of the disclosure; and
Fig. 9 is a flowchart of data transmission/retransmission according to a third embodiment of the disclosure.

### DETAILED DESCRIPTION

The preferred embodiments of the disclosure are described below in combination with the drawings in detail. It should be understood that the described preferred embodiments below are only intended to describe and explain the disclosure, and the accompanying drawings are for reference only and are not intended to limit the disclosure.

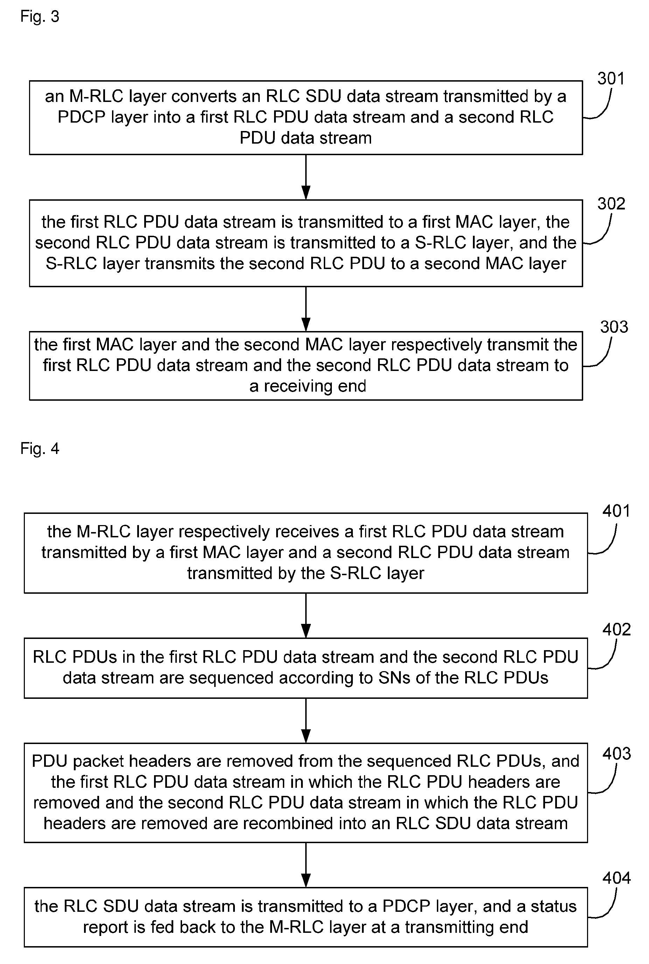

An embodiment of the disclosure provides a data packet shunting transmission method, as shown in Fig. 3, which is applied to a Radio Link Control (RLC) layer; the RLC layer includes a Master-Radio Link Control (M-RLC) layer and a Secondary-Radio Link Control (S-RLC) layer. The method may be applied to transmitting data under an Acknowledge Mode (AM) and an Unacknowledged mode (UM). In one preferred embodiment of the disclosure, the method includes the following steps that:
Step 301: the M-RLC layer converts an RLC Service Data Unit (RLC SDU) data stream transmitted by a Packet Data Convergence Protocol (PDCP) layer into a first RLC Protocol Data Unit (RLC PDU) data stream and a second RLC PDU data stream.

Specifically, the M-RLC layer receives the RLC SDU data stream transmitted by the PDCP layer, and divides the RLC SDU data stream into a first RLC SDU data stream and a second RLC SDU data stream;
segmentation and/or concatenation processing is performed on each RLC SDU in the first RLC SDU data stream according to first indication information transmitted by a first MAC layer, and a PDU packet header is added to each RLC SDU subjected to segmentation and/or concatenation processing to package the first RLC SDU data stream into the first RLC PDU data stream;
segmentation and/or concatenation processing is performed on each RLC SDU in the second RLC SDU data stream according to second indication information transmitted by the S-RLC layer or a pre-estimated value preset by the M-RLC layer, and a PDU packet header is added to each RLC SDU subjected to segmentation and/or concatenation processing to package the second RLC SDU data stream into the second RLC PDU data stream.

The PDCP layer, the M-RLC layer, the S-RLC layer, the first MAC layer and the second MAC layer in the embodiment respectively correspond to different protocol hierarchies, specifically, the PDCP layer is a superior protocol hierarchy to the M-RLC layer and the S-RLC layer; the M-RLC layer is a superior protocol hierarchy to the first MAC layer; the S-RLC layer is a superior protocol hierarchy to the second MAC layer.

Preferably, the first indication information and the second indication information may be semi-statically configured and rough pre-estimated values.

Preferably, the method further includes: the M-RLC layer retransmits data packets, which the receiving end fails to receive, according to a status report fed back by the receiving end.

Step 302: the first RLC PDU data stream is transmitted to the first MAC layer, the second RLC PDU data stream is transmitted to the S-RLC layer, and the S-RLC layer transmits the second RLC PDU data stream to the second MAC layer.

Preferably, the step that the S-RLC layer transmits the second RLC PDU data stream to the second MAC layer includes:
segmentation and/or concatenation processing is performed on each RLC PDU in the second RLC PDU data stream according to indication information transmitted by the second MAC layer, a PDU packet header is added to each RLC PDU subjected to segmentation and/or concatenation processing or a PDU packet header of each RLC PDU subjected to segmentation and/or concatenation processing is modified, and the resulting second RLC PDU data stream is transmitted to the second MAC layer.

Step 303: the first MAC layer and the second MAC layer respectively transmit the first RLC PDU data stream and the second RLC PDU data stream to the receiving end; specifically, the first MAC layer transmits the first RLC PDU data stream to the receiving end; the second MAC layer transmits the second PDU data stream to the receiving end.

In an actual application, the M-RLC layer and the first MAC layer in the method according to the embodiment of the disclosure may be located in a Master eNB (MeNB), and correspondingly, the S-RLC layer and the second MAC layer may be also located in a Secondary eNB (SeNB), thus implementing shunting of a downlink data stream in the MeNB, and transmitting downlink data to User Equipment (UE) through the MeNB and the SeNB.

In an actual application, the M-RLC layer and the first MAC layer as well as the S-RLC layer and the second MAC layer in the method according to the embodiment of the disclosure may be located in the UE at the same time, thus implementing shunting of uplink data in the UE, and transmitting two channels of uplink data to the MeNB and the SeNB respectively.

The embodiment of the disclosure further provides a data packet shunting transmission method, as shown in Fig. 4, which is applied to an RLC layer; the RLC layer includes an M-RLC layer and an S-RLC layer. The method may be applied to an AM. In one preferred embodiment of the disclosure, the method includes the following steps that:
Step 401: the M-RLC layer respectively receives a first RLC PDU data stream transmitted by a first MAC layer and a second RLC PDU data stream transmitted by the S-RLC layer.
   Before the Step 401, the S-RLC layer receives the second RLC PDU data stream transmitted by the second MAC layer, performs PDU packet header removal or modification, sequencing and reassembly on the second RLC PDU data stream, and transmits the resulting second RLC PDU data stream to the M-RLC layer.
Step 402: the RLC PDUs in the first RLC PDU data stream and the second RLC PDU data stream are sequenced according to their Serial Numbers (SNs);
Step 403: PDU packet headers are removed from the sequenced RLC PDUs, and the first RLC PDU data stream in which the RLC PDU headers are removed and the second RLC PDU data stream in which the RLC PDU headers are removed are reassembled into an RLC SDU data stream;
Step 404: the RLC SDU data stream is transmitted to a PDCP layer, and a status report is fed back to the M-RLC layer at a transmitting end.

In an actual application, the M-RLC layer and the first MAC layer in the method according to the embodiment of the disclosure may be located in an MeNB, and correspondingly, the S-RLC layer and the second MAC layer may be located in an SeNB, thus implementing reassembly of an uplink data stream in the MeNB.

In an actual application, the M-RLC layer and the first MAC layer as well as the S-RLC layer and the second MAC layer in the method according to the embodiment of the disclosure may be located in the UE at the same time, thus implementing reassembly of downlink data in the UE.

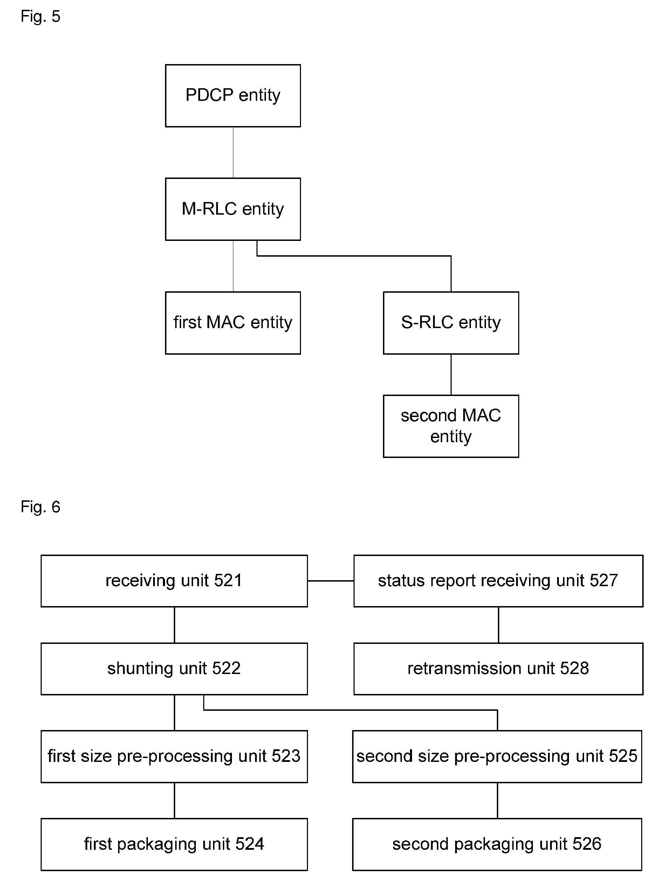

An embodiment of the disclosure further provides a data packet shunting transmission system, as shown in Fig. 5, which includes: a PDCP entity 51, an M-RLC entity 52, an S-RLC entity 53, a first MAC entity 54 and a second MAC entity 55, in which:
the PDCP entity 51 is configured to transmit an RLC SDU data stream to the M-RLC entity;
the M-RLC entity 52 is configured to convert the RLC SDU data stream transmitted by the PDCP entity into a first RLC PDU data stream and a second RLC PDU data stream, transmit the first RLC PDU data stream to the first MAC entity 54, and transmit the second RLC PDU data stream to the S-RLC entity 53;
the S-RLC entity 53 is configured to receive the second RLC PDU data stream transmitted by the M-RLC entity 52, and transmit the second RLC PDU data stream to the second MAC entity 55;
the first MAC entity 54 is configured to receive the first RLC PDU data stream transmitted by the M-RLC entity 52, and transmit the first RLC PDU data stream to a receiving end;
the second MAC entity 55 is configured to receive the second RLC PDU data stream transmitted by the S-RLC entity 53, and transmit the second RLC PDU data stream to the receiving end.

Preferably, as shown in Fig. 6, the M-RLC entity 52 includes: a receiving unit 521, a shunting unit 522, a first size pre-processing unit 523, a first packaging unit 524, a second size pre-processing unit 525 and a second packaging unit 526, in which:
the receiving unit 521 is configured to receive the RLC SDU data stream transmitted by the PDCP entity 51;
the shunting unit 522 is configured to divide the RLC SDU data stream into a first RLC SDU data stream and a second RLC SDU data stream;
the first size pre-processing unit 523 is configured to perform segmentation and/or concatenation processing on each RLC SDU in the first RLC SDU data stream according to first indication information transmitted by the first MAC entity 54;
the first packaging unit 524 is configured to add PDU packet headers to the RLC SDUs segmented and/or concatenated by the first size pre-processing unit 523 to package the first RLC SDU data stream into the first RLC PDU data stream;
the second size pre-processing unit 525 is configured to perform segmentation and/or concatenation processing on each RLC SDU in the second RLC SDU data stream according to second indication information transmitted by the S-RLC entity 53 or a pre-estimated value preset by the M-RLC entity 52;
the second packaging unit 526 is configured to add a PDU packet header to each RLC SDU segmented and/or concatenated by the second size pre-processing unit 525 to package the second RLC SDU data stream into the second RLC PDU data stream.

Preferably, the M-RLC entity 52 further includes: a status report receiving unit 527 and a retransmission unit 528, in which:
the status report receiving unit 527 is configured to receive a status report fed back by the receiving end;
the retransmission unit 528 is configured to retransmit data packets, which the receiving end fails to receive, according to the status report.

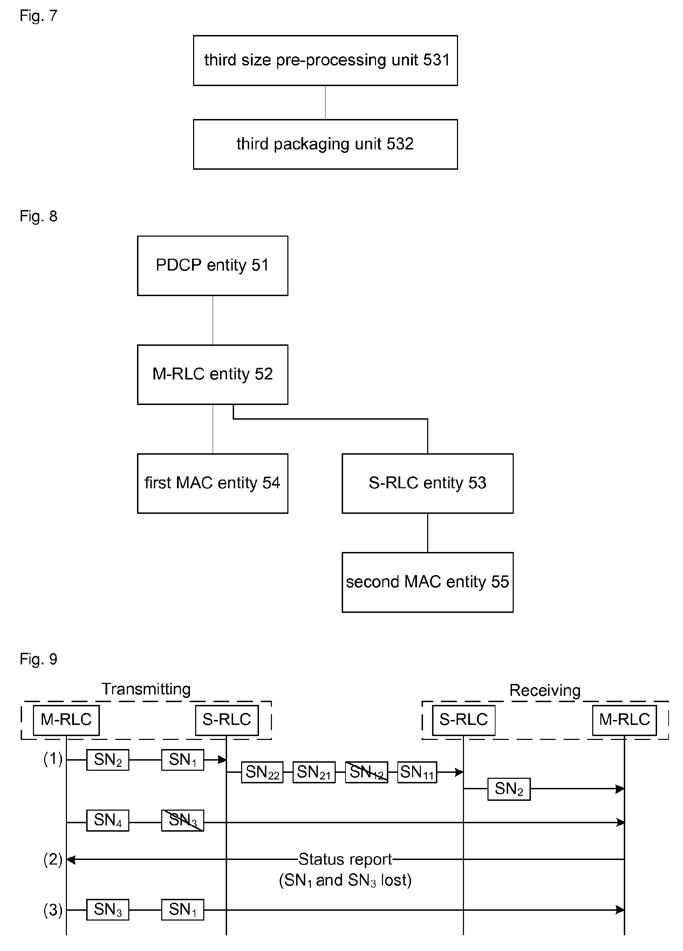

Preferably, as shown in Fig. 7, the S-RLC entity 53 includes: a third size pre-processing unit 531 and a third packaging unit 532, in which:
the third size pre-processing unit 531 is configured to perform segmentation and/or concatenation processing on each RLC PDU in the second RLC PDU data stream according to indication information transmitted by the second MAC entity 55;
the third packaging unit 532 is configured to add PDU packet headers to the RLC PDUs segmented and/or concatenated by the third size pre-processing unit 531 or modify PDU pack headers of the RLC PDUs segmented and/or concatenated by the third size pre-processing unit 531, and transmit the resulting second RLC PDU data stream to the second MAC entity.

A person skilled in the art should understand that the implemented functions of all apparatuses and units in the data packet shunting transmission system as shown in figures from Fig. 5 to Fig. 7 may be understood with reference to relevant descriptions of the data packet shunting transmission method. Functions of processing units in the data packet shunting transmission system as shown in figures from Fig. 5 to Fig. 7 may be either implemented by programs running on a processor or implemented by a specific logic circuit.

The embodiment of the disclosure further provides a data packet shunting transmission system, as shown in Fig. 8, which includes a PDCP entity 51, an M-RLC entity 52, an S-RLC entity 53, a first MAC entity 54 and a second MAC entity 55, in which:
the first MAC entity 54 is configured to transmit a first RLC PDU data stream to the M-RLC entity 52;
the second MAC entity 55 is configured to transmit a second RLC PDU data stream to the S-RLC entity 53;
the S-RLC entity 53 is configured to receive the second RLC PDU data stream transmitted by the second MAC entity 55, and transmit the second RLC PDU data stream to the M-RLC entity 52;
the M-RLC entity 52 is configured to respectively receive the first RLC PDU data stream transmitted by the first MAC entity 54 and the second RLC PDU data stream transmitted by the S-RLC entity 53; sequence the RLC PDUs in the first RLC PDU data stream and the second RLC PDU data stream according to SNs of the RLC PDUs; remove PDU packet headers from the sequenced RLC PDUs; reassemble the first RLC PDU data stream in which the RLC PDU packet headers are removed and the second RLC PDU data stream in which the RLC PDU packet headers are removed into an RLC SDU data stream; transmit the RLC SDU data stream to the PDCP entity 51, and feed back a status report to the M-RLC entity at a transmitting end.

The PDCP entity 51 is configured to receive the RLC SDU data stream transmitted by the M-RLC entity 52.

Preferably, the S-RLC entity 53 is further configured to receive the second RLC PDU data stream transmitted by the second MAC entity 55; perform PDU packet header removal or modification, sequencing and reassembly on the second RLC PDU data stream, and transmit the second RLC PDU data stream to the M-RLC entity 52.

A person skilled in the art should understand that the implemented functions of all apparatuses in the data packet shunting transmission system as shown in Fig. 8 may be understood with reference to relevant descriptions of the data packet shunting transmission method.

Fig. 9 is a flowchart of data transmission/retransmission according to a third embodiment of the disclosure. In the embodiment, for AM data, the M-RLC at the receiving end will feed back a status report at proper time according to a configuration of a control plane; SNs in the status report are based on header information distributed by the M-RLC at the transmitting end. After receiving the status report, the M-RLC at the transmitting end retransmits data packets indicated by transmission FAILURE, but can still transmit the to-be-retransmitted data packets to the opposite end or the S-RLC alternatively. Furthermore, the M-RLC may take removal/modification of transmission of a shunting link into consideration as per the number of times of transmission failure of the shunted data packets.

Based on the technical solution of the embodiment of the disclosure, for shunting data transmission of a certain Acknowledge Mode bearer (AM EPS) of certain UE as an example, the embodiment may be implemented by the following process:
at the transmitting end, the M-RLC, according to a configured shunting strategy or current available radio resource statuses and other information, determines to transmit the data packets to the S-RLC and the M-RLC at the receiving end two by two (for example only, which indicates that the current data flows of two transmission links are substantially the same) in sequence according to the sequence that a Transmission Buffer (TB) receives the data packets of the upper layer.

The M-RLC performs size pre-processing, such as segmentation and/or concatenation, on the previous two RLC SDUs, and the pre-processing function is the same as that of the traditional art on the basis of a rough estimation made by the M-RLC, or a size value obtained by information interaction with the S-RLC. At the moment, it supposes that two data packets are still obtained after size processing of the M-RLC, so the M-RLC transmits the data packets to the corresponding S-RLC after adding data packet headers (distribution SN=1, 2) and packaging the data packets into RLC PDUs.

The S-RLC at the transmitting end performs size re-processing on the data packets according to an indication of the lower layer (the MAC layer) for current available radio resources after receiving the PDUs of the M-RLC. Wherein, the processing may be segmentation and/or concatenation. Correspondingly, data packet headers may be processed by modification or adding. After the data packet headers are processed, data packets (RLC PDUs) which can be transmitted by the S-RLC to the lower layer are obtained. It should be noted that SN₁₁, SN₁₂, SN₂₁ and SN₂₂, as shown in the figure, are for clear expression only; actually, the S-RLC processes the RLC PDUs transmitted by the M-RLC as RLC SDU, and formats of the modified/added PDU packet headers may be the same as those in the traditional art.

The M-RLC, according to the traditional art, performs size processing and data packet header adding (it is still supposed that two data packets are obtained after size processing here, so the M-RLC distributes SN=3, 4) on the latter two data packets (RLC SDUs) which are determined to be directly transmitted to the M-RLC at the opposite end, obtains packaged RLC PDUs, transmits them to the lower layer (the MAC layer), and further transmits to the M-RLC at the receiving end.

At the receiving end, the S-RLC receives the data packets SN₁₁, SN₂₁ and SN₂₂ (within a configured period of time), performs Hybrid Automatic Repeat Request (HARQ) and outer data packet header removal on these data packets, reassembles the SN₂₁ and SN₂₂ with complete received data portions into a data packet SN₂, and transmits it to the upper layer (for the M-RLC at the receiving end, as the data packet SN₁₂ has not been received yet, the S-RLC cannot reassemble the data packet with SN=1).

Furthermore, within a period of same configuration time, the M-RLC at the receiving end receives the data packet SN₄ transmitted by the M-RLC at the opposite end. At the moment, the data packets SN₂ and the SN₄ are located in a Reception Buffer.

According to an existing status reporting triggering and transmitting mechanism, in the technical solution of the embodiment of the disclosure, the M-RLC at the receiving end will feed back STATUS PDU to the M-RLC at the transmitting end. In the STATUS PDU, the M-RLC at the receiving end indicates that the data packet SN₄ has been received and the data packets SN₁ and SN₃ have not been received.

The M-RLC, which receives the STATUS PDU, at the transmitting end will retransmit RLC PDUs with SN=1, 3. Wherein, the retransmission link still may be located at the S-RLC side alternatively; the M-RLC can calculate the number of times of transmission failure of data packets shunted to the S-RLC for transmission. If considering that the shunted data packets borne by the S-RLC are higher in transmission failure rate, the M-RLC may reduce the number of data packets shunted to the S-RLC for transmission or cancel the shunting link for consideration.

After receiving all the data packets (SN₁, SN₂, SN₃ and SN₄) successfully, the M-RLC at the receiving end can transmit them to the upper layer (the PDCP layer) in order.

An embodiment of the disclosure further discloses a computer storage medium, which saves computer executable instructions. The computer executable instructions are configured to execute the method of any technical solution on the first aspect of the embodiment of the disclosure, specifically the method as shown in Fig. 3.

An embodiment of the disclosure further discloses a computer storage medium, which saves computer executable instructions. The computer executable instructions are configured to execute the method of any technical solution on the first aspect of the embodiment of the disclosure, specifically the method as shown in Fig. 4.

The above two computer storage media may be USB flash disks, optical disks, DVDs, magnetic tapes or other computer readable storage media, preferably, non-instant storage media.

The above embodiments are only preferred embodiments of the disclosure, and are not intended to limit the scope of protection of the disclosure. Any modification made without departing from the principle of the disclosure shall fall within the scope of protection of the disclosure.

## Claims

1. A data packet shunting transmission method, which is applied to a Radio Link Control (RLC) layer which includes a Master-Radio Link Control (M-RLC) layer and a Secondary-Radio Link Control (S-RLC) layer, comprising:
converting, by the M-RLC layer, an RLC Service Data Unit (RLC SDU) data stream transmitted by a Packet Data Convergence Protocol (PDCP) layer into a first RLC Protocol Data Unit (RLC PDU) data stream and a second RLC PDU data stream;
transmitting the first RLC PDU data stream to a first Medium Access Control (MAC) layer;
transmitting the second RLC PDU data stream to the S-RLC layer;
transmitting, by the S-RLC layer, the second RLC PDU to a second MAC layer;
transmitting, by the first MAC layer, the first RLC PDU data stream to a receiving end; and
transmitting, by a second MAC layer, the second RLC PDU data stream to the receiving end.

2. The data packet shunting transmission method according to claim 1, wherein converting, by the M-RLC layer, the RLC SDU data stream transmitted by the PDCP layer into the first RLC PDU data stream and the second RLC PDU data stream comprises:
receiving, by the M-RLC layer, the RLC SDU data stream transmitted by the PDCP layer;
dividing the RLC SDU data stream into a first RLC SDU data stream and a second RLC SDU data stream;
performing segmentation and/or concatenation processing on each RLC SDU in the first RLC SDU data stream according to first indication information transmitted by the first MAC layer, and adding a PDU packet header to each RLC SDU subjected to segmentation and/or concatenation processing to package the first RLC SDU data stream into the first RLC PDU data stream; and
performing segmentation and/or concatenation processing on each RLC SDU in the second RLC SDU data stream according to second indication information transmitted by the S-RLC layer or a pre-estimated value preset by the M-RLC layer, and adding a PDU packet header to each RLC SDU subjected to segmentation and/or concatenation processing to package the second RLC SDU data stream into the second RLC PDU data stream.

3. The data packet shunting transmission method according to claim 1, further comprising: retransmitting, by the M-RLC layer, data packets, which the receiving end fails to receive, according to a status report fed back by the receiving end.

4. The data packet shunting transmission method according to any one of claims 1 to 3, wherein transmitting, by the S-RLC layer, the second RLC PDU data stream to the second MAC layer comprises:
performing segmentation and/or concatenation processing on each RLC PDU in the second RLC PDU data stream according to indication information transmitted by the second MAC layer, adding a PDU packet header to each RLC PDU subjected to segmentation and/or concatenation processing or modifying a PDU packet header of each RLC PDU subjected to segmentation and/or concatenation processing, and transmitting the resulting second RLC PDU data stream to the second MAC layer.

5. A data packet shunting transmission method, which is applied to a Radio Link Control (RLC) layer which includes a Master-Radio Link Control (M-RLC) layer and a Secondary-Radio Link Control (S-RLC) layer, comprising:
respectively receiving, by the M-RLC layer, a first RLC Protocol Data Unit (RLC PDU) data stream transmitted by a first Medium Access Control (MAC) layer and a second RLC PDU data stream transmitted by the S-RLC layer;
sequencing RLC PDUs in the first RLC PDU data stream and the second RLC PDU data stream according to Serial Numbers (SNs) of the RLC PDUs;
removing PDU packet headers from the sequenced RLC PDUs;
reassembling the first RLC PDU data stream in which the RLC PDU headers are removed and the second RLC PDU data stream in which the RLC PDU headers are removed into an RLC Service Data Unit (RLC SDU) data stream; and
transmitting the RLC SDU data stream to a Packet Data Convergence Protocol (PDCP) layer, and feeding back a status report to the M-RLC layer at a transmitting end.

6. The data packet shunting transmission method according to claim 5, further comprising:
receiving, by the S-RLC layer, the second RLC PDU data stream transmitted by a second MAC layer;
performing PDU packet header removal or modification, sequencing and reassembly on the second RLC PDU data stream, and transmitting the resulting second RLC PDU data stream to the M-RLC layer.

7. A data packet shunting transmission system, comprising a Packet Data Convergence Protocol (PDCP) entity, a Master-Radio Link Control (M-RLC) entity, a Secondary-Radio Link Control (S-RLC) entity, a first Medium Access Control (MAC) entity and a second MAC entity,
wherein the PDCP entity is configured to transmit an RLC Service Data Unit (RLC SDU) data stream to the M-RLC entity;
wherein the M-RLC entity is configured to convert the RLC SDU data stream transmitted by the PDCP entity into a first RLC Protocol Data Unit (RLC PDU) data stream and a second RLC PDU data stream, transmit the first RLC PDU data stream to the first MAC entity, and transmit the second RLC PDU data stream to the S-RLC entity;
wherein the S-RLC entity is configured to receive the second RLC PDU data stream transmitted by the M-RLC entity, and transmit the second RLC PDU data stream to the second MAC entity;
wherein the first MAC entity is configured to receive the first RLC PDU data stream transmitted by the M-RLC entity, and transmit the first RLC PDU data stream to a receiving end; and
wherein the second MAC entity is configured to receive the second RLC PDU data stream transmitted by the S-RLC entity, and transmit the second RLC PDU data stream to the receiving end.

8. The data packet shunting transmission system according to claim 7, wherein the M-RLC entity comprises: a receiving unit, a shunting unit, a first size pre-processing unit, a first packaging unit, a second size pre-processing unit and a second packaging unit,
the receiving unit is configured to receive the RLC SDU data stream transmitted by the PDCP entity;
the shunting unit is configured to divide the RLC SDU data stream into a first RLC SDU data stream and a second RLC SDU data stream;
the first size pre-processing unit is configured to perform segmentation and/or concatenation processing on each RLC SDU in the first RLC SDU data stream according to first indication information transmitted by the first MAC entity;
the first packaging unit is configured to add PDU packet headers to the RLC SDUs segmented and/or concatenated by the first size pre-processing unit to package the first RLC SDU data stream into the first RLC PDU data stream;
the second size pre-processing unit is configured to perform segmentation and/or concatenation processing on each RLC SDU in the second RLC SDU data stream according to second indication information transmitted by the S-RLC entity or a pre-estimated value preset by the M-RLC entity; and
the second packaging unit is configured to add a PDU packet header to each RLC SDU segmented and/or concatenated by the second size pre-processing unit to package the second RLC SDU data stream into the second RLC PDU data stream.

9. The data packet shunting transmission system according to claim 7, wherein the M-RLC entity further comprises: a status report receiving unit and a retransmission unit,
the status report receiving unit is configured to receive a status report fed back by the receiving end; and
the retransmission unit is configured to retransmit data packets, which the receiving end fails to receive, according to the status report.

10. The data packet shunting transmission system according to any one of claims 7 to 9, wherein the S-RLC entity comprises: a third size pre-processing unit and a third packaging unit,
the third size pre-processing unit is configured to perform segmentation and/or concatenation processing on each RLC PDU in the second RLC PDU data stream according to indication information transmitted by the second MAC entity; and
the third packaging unit is configured to add PDU packet headers to the RLC PDUs segmented and/or concatenated by the third size pre-processing unit or modify PDU pack headers of the RLC PDUs segmented and/or concatenated by the third size pre-processing unit, and transmit the resulting second RLC PDU data stream to the second MAC entity.

11. A data packet shunting transmission system, comprising a Packet Data Convergence Protocol (PDCP) entity, a Master-Radio Link Control (M-RLC) entity, a Secondary-Radio Link Control (S-RLC) entity, a first Medium Access Control (MAC) entity and a second MAC entity,
wherein the first MAC entity is configured to transmit a first RLC Protocol Data Unit (RLC PDU) data stream to the M-RLC entity;
wherein the second MAC entity is configured to transmit a second RLC PDU data stream to the S-RLC entity;
wherein the S-RLC entity is configured to receive the second RLC PDU data stream transmitted by the second MAC entity, and transmit the second RLC PDU data stream to the M-RLC entity;
wherein the M-RLC entity is configured to respectively receive the first RLC PDU data stream transmitted by the first MAC entity and the second RLC PDU data stream transmitted by the S-RLC entity; sequence RLC PDUs in the first RLC PDU data stream and the second RLC PDU data stream according to SNs of the RLC PDUs; remove PDU packet headers from the sequenced RLC PDUs; reassemble the first RLC PDU data stream in which the RLC PDU packet headers are removed and the second RLC PDU data stream in which the RLC PDU packet headers are removed into an RLC Service Data Unit (RLC SDU) data stream; transmit the RLC SDU data stream to the PDCP entity, and feed back a status report to the M-RLC entity at a transmitting end; and
wherein the PDCP entity is configured to receive the RLC SDU data stream transmitted by the M-RLC entity.

12. The data packet shunting transmission system according to claim 11, wherein the S-RLC entity is further configured to receive the second RLC PDU data stream transmitted by the second MAC entity; perform PDU packet header removal or modification, sequencing and reassembly on the second RLC PDU data stream, and transmit the resulting second RLC PDU data stream to the M-RLC entity.

13. A computer storage medium having stored therein computer executable instructions for executing the method according to any one of claims 1 to 4.

14. A computer storage medium having stored therein computer executable instructions for executing the method according to claim 5 or 6.
